Europäisches Patentamt

(19) European Patent Office

Office européen des brevets

(11) Numéro de publication : **0 432 062 A1**

(12) # DEMANDE DE BREVET EUROPEEN

(21) Numéro de dépôt : 90420519.2

(22) Date de dépôt : 30.11.90

(51) Int. Cl.⁵ : **A01N 25/04, B01F 17/00**

(30) Priorité : 04.12.89 FR 8915956

(43) Date de publication de la demande :
**12.06.91 Bulletin 91/24**

(84) Etats contractants désignés :
**AT BE CH DE DK ES FR GB GR IT LI LU NL SE**

(71) Demandeur : **RHONE-POULENC CHIMIE**
**25, quai Paul Doumer**
**F-92408 Courbevoie Cédex (FR)**

(72) Inventeur : **Fiard, Jean-François**
**16, rue des Orteaux**
**F-75020 Paris (FR)**
Inventeur : **Malavieille, Christine**
**54, rue de Levis**
**F-75017 Paris (FR)**

(74) Mandataire : **Vignally, Noel et al**
**Rhône-Poulenc Chimie Service Brevets**
**Chimie Centre de Recherches des Carrières**
**B.P. 62**
**F-69192 Saint-Fons Cédex (FR)**

(54) **Microemulsions concentrées de matières organiques diluables sous forme d'émulsions stables et leur procédé de préparation.**

㊗ Microémulsions concentrées de matières organiques insolubles dans l'eau contenant une matière organique à l'état liquide insoluble dans l'eau, un système tensio-actif constitué d'un agent tensio-actif anionique, d'un agent tensio-actif non-ionique et d'un cotensio-actif (alcool ou éther-alcool) et de l'eau.

EP 0 432 062 A1

Jouve, 18, rue Saint-Denis, 75001 PARIS

## MICROEMULSIONS CONCENTREES DE MATIERES ORGANIQUES DILUABLES SOUS FORME D'EMULSIONS STABLES ET LEUR PROCEDE DE PREPARATION

La présente invention a pour objet des microémulsions concentrées de matières organiques insolubles dans l'eau, lesdites microémulsions étant susceptibles de former des émulsions stables après dilution.

Les microémulsions concentrées de matières organiques insolubles dans l'eau faisant l'objet de l'invention sont caractérisées en ce qu'elles contiennent :

– de 30 à 85% de leur poids, de préférence de 35 à 80% de leur poids, d'au moins une matière organique à l'état liquide insoluble dans l'eau,

– de 5 à 45% de leur poids, de préférence de 10 à 40% de leur poids d'un système tensio-actif constitué d'un agent tensio-actif anionique, d'un agent tensio-actif non-ionique et d'un cotensio-actif choisi parmi les alcools aliphatiques linéaires ou ramifiés en $C_2$-$C_{10}$, de préférence en $C_3$-$C_5$, et les éthers-alcools de formule $R$-$(OR')_n$ OH, où $R$ représente un radical alkyle linéaire ou ramifié en $C_1$-$C_8$, de préférence en $C_2$-$C_4$, $R'$ un radical alkylène en $C_2$-$C_3$, de préférence en $C_2$ et $n$ un nombre entier allant de 1 à 3, le rapport pondéral agent tensio-actif non-ionique/agent tensio-actif anionique pouvant aller de 10/90 à 90/10, de préférence de 25/75 à 75/25, et le rapport pondéral cotensio-actif/agents tensio-actifs non-ionique et anionique pouvant aller de 1/10 à 2 et de préférence de l'ordre de 1/4 à 3/4,

– et le complément à 100% en poids d'eau.

On entend par matière insoluble dans l'eau, tout produit organique présentant une solubilité dans l'eau inférieure à 10 g/l. Ladite matière organique peut être liquide ou solide. S'il s'agit d'un solide, celui-ci est présent sous forme liquide en solution dans un solvant.

Dans le cas particulier d'un solide à bas point de fusion, c'est-à-dire inférieur à 50°C, celui-ci est de préférence maintenu à l'état fondu à l'aide d'un solvant (dudit solide) et éventuellement d'un agent tensio-actif liposoluble.

Parmi les matière organiques insolubles dans l'eau pouvant être mise en oeuvre on peut citer les huiles paraffiniques, les huiles essentielles, les matières actives phytosanitaires (insecticides, fongicides, herbicides).

A titre d'exemples de matières actives phytosanitaires, on peut citer :
– l'alachlor
– le bromoxynil octanoate ou heptanoate
– le prochloraz
– le perméthrine
– le chloropyrifos méthyle
– le phospholane
– le tri-allate

– le tridiphane
– le diméthachlor
– le chloropropham
– les cyperméthrines
– la deltaméthrine
– le propham
– le tetraméthrine
– le furalaxyl
– l'heptachlor
– le propanil
– l'oxadiazon
– le triflumizole
– la diméthaméthrine.

Parmi les solvants des matières organiques pouvant maintenir celles-ci à l'état fondu (en surfusion) on peut citer les solvants aromatiques (tel que benzène, xylènes, toluène), les coupes pétrolières aromatiques, les phtalates de dialkyle, le phtalate de 2-diéthylhexyle, le dichlorométhane, le trichlorométhane, le 1,2-dichloroéthane, l'isophorone.

Ils sont mis en oeuvre selon un rapport pondéral solvant/matière organique pouvant aller de 5/95 à 60/40 et de l'ordre de 5/95 à 40/60 lorsqu'il s'agit d'une matière organique à bas point de fusion.

Parmi les agents tensio-actifs liposolubles éventuellement présents pour maintenir la matière organique à l'état fondu (par dissolution dans la matière organique fondue) on peut citer les agents non-ioniques tels que les di- ou tri-styrylphénols alcoxylés, les alkylphénols alcoxylés, les amines grasses alcoxylées, les alcools gras alcoxylés, les triglycérides (par exemple huile de ricin) alcoxylés, choisis parmi ceux dont le HLB est inférieur à 13 et de préférence inférieur à 10.

Pour la définition du HLB (balance hydrophilie-lipophilie) on peut se référer par exemple à l'ouvrage KIRK OTHMER ENCYCLOPEDIA OF CHEMICAL TECHNOLOGY, 3ème édition, volume 8, page 910-912.

Il sont mis en oeuvre selon un rapport pondéral tensio-actif liposoluble/matière organique pouvant aller de 0 à 30/70, avec un rapport pondéral solvant + tensio-actif liposoluble/matière organique pouvant aller de 5/95 à 60/40 et de préférence de 5/95 à 40/60.

Parmi les agents tensio-actifs non-ioniques présents dans le système tensio-actif de la microémulsion, on peut citer les di- ou tri-styrylphénols alcoxylés, les alkylphénols alcoxylés, les amines grasses alcoxylées, les alcools gras alcoxylés, les triglycérides (par exemple huile de ricin) alcoxylés, dont le HLB est inférieur ou égal à 16.

Parmi les agents tensio-actifs anioniques présents dans le système tensio-actif de la microémulsion on peut citer les di- ou tri-styrylphénols alcoxylés phosphatés, les alkylphénols alcoxylés sulfatés, sulfonés ou phosphatés, les alcools gras alcoxylés sulfatés ou phosphatés, sous forme acide ou neutralisée, le dodécylbenzène sulfonate de sodium, de calcium.

Parmi les cotensio-actifs présents dans le système tensio-actif de la microémulsion, on peut citer le n-propanol, l'isobutanol, le n-butanol, le 2-méthoxyéthanol, le 2-éthoxyéthanol, le 2-isopropoxyéthanol ou le 2-n-butoxyéthanol, le diéthylèneglycol monoéthyléther, le diéthylèneglycol monoéthyléther, le diéthylèneglycol mono-n-butyléther, le triéthylèneglycol monoéthyléther.

Les microémulsions faisant l'objet de l'invention peuvent être obtenues par addition d'eau à un mélange comprenant au moins une matière organique insoluble dans l'eau à l'état liquide et un système tensio-actif constitué d'un agent tensio-actif anionique, d'un agent tensio-actif non-ionique et d'un cotensio-actif choisi parmi les alcools et les éthers-alcools.

La nature de ces différents composants et leurs quantités respectives correspondent à celles données ci-dessus. L'eau mise en oeuvre peut contenir de faibles quantités (moins de 5% en poids) d'un sel tel que NaCl, KCl.

Lorsque la matière organique est un solide, celle-ci est mise en oeuvre à l'état liquide sous forme d'une solution dans un de ses solvants. Lorsque celle-ci est un solide à bas point de fusion, c'est-à-dire inférieur à 50°C, un mode préférentiel consiste à fondre ledit solide et à le maintenir à l'état liquide à l'aide d'un de ses solvants (par surfusion) et éventuellement un agent tensio-actif liposoluble (par dissolution dudit tensio-actif dans la matière fondue).

La nature du solvant et de l'agent tensio-actif liposoluble permettant de maintenir la matière organique solide à l'état liquide, ainsi que leurs quantités mises en oeuvre ont déjà été mentionnées ci-dessus. Les microémulsions faisant l'objet de l'invention sont stables dans un domaine de température de l'ordre de -5° à +45°C.

Elles présentent l'avantage de ne présenter qu'une très faible quantité de solvant et de donner des émulsions parfaitement stables par dilution dans l'eau. Les microémulsions de l'invention sont particulièrement intéressantes pour la formulation de matières organiques phytosanitaires, notamment de matières organiques phytosanitaires à bas point de fusion, car ces microémulsions ne font apparaître aucun phénomène de sédimentation, cristallisation ou coalescence au stockage ; les émulsions formées après dilution sont en outre bien placées sur le plan écotoxicologique puisque la quantité de solvant qu'elles renferment est faible.

Les exemples suivants sont donnés à titre indicatif et ne peuvent être considérés comme une limite du domaine et de l'esprit de l'invention.

### Exemple 1

On dissout 40 g de prochloraz fondu dans 10 g de SOLVESSO 200® (coupe pétrolière aromatique commercialisée par ESSO).

On ajoute à ce mélange :
– 10 g de SOPROPHOR 461 P® (nonylphénol éthopropoxylé de HLB = 12,3 commercialisé par RHONE-POULENC)
– 10 g de SOPROPHOR PA 23® (alkylpolyéthoxyéther phosphate sous forme acide commercialisé par RHONE-POULENC)
– 10 g de n-butanol
– puis 20 g d'eau.

L'ensemble est soumis à une agitation classique. On obtient ainsi une microémulsion stable dans une gamme de température de l'ordre de -5°C à +45°C. Celle-ci est de couleur brun clair et fluide. Elle donne une émulsion stable de diamètre moyen = 0,6 micron par dilution par 100 fois son volume d'eau.

### Example 2

On répète l'opération décrite à l'exemple 1 à partir de :
– 40 g de prochloraz fondu
– 10 g de SOLVESSO 200®
– 11 g de SOPROPHOR PA 23®
– 11 g de SOPROPHOR 461 P®
– 11 g de butoxy-2 éthanol
– et 17 g d'eau.

On obtient une microémulsion comparable à celle de l'exemple 1.

### Exemple 3

On répète l'opération décrite à l'exemple 1 à partir de :
– 40 g de prochloraz fondu
– 10 g de SOLVESSO 200®
– 11,5 g de SOPROPHOR PA 23®
– 11,5 g de SOPROPHOR 461 P®
– 7 g de n-butanol
– 20 g d'eau.

On obtient une microémulsion comparable à celle de l'exemple 1 ou 2.

### Exemple 4

On répète l'opération decrite à l'exemple 1 à partir de :
– 40 g de prochloraz fondu
– 10 g de SOLVESSO 200®
– 17 g de SOPROPHOR PA 23®
– 6 g de SOPROPHOR 461 P®
– 10 g de n-butanol
– 17 g d'eau.

On obtient une microémulsion stable à une température de l'ordre de -5°C à +45°C et diluable sous forme d'une émulsion stable.

## Exemple 5

On répète l'opération décrite à l'exemple 1 à partir de :
- 40 g de prochloraz fondu
- 10 g de SOLVESSO 200®
- 6 g de SOPROPHOR PA 23®
- 17 g de SOPROPHOR 461 P®
- 10 g de n-butanol
- 17 g d'eau.

On obtient une microémulsion stable à une température de l'ordre de -5°C à +45°C et diluable sous forme d'une émulsion stable.

## Exemple 6

On répète l'opération décrite à l'exemple 1 à partir de :
- 49 g d'alachlor fondu
- 21 g de SOLVESSO 200®
- 7,5 g de SOPROPHOR 4 D 384® (aryphenoloxyethylé et sulfaté de HLB = 16 commercialisé par RHONE-POULENC)
- 7,5 g de SOPROPHOR 461 P®
- 7 g d'isobutanol
- 8 g d'eau.

On obtient une microémulsion fluide et stable à une température de l'ordre de -5°C à +45°C et diluable sous forme d'une émulsion stable.

## Exemple 7

On répète l'opération décrite à l'exemple 1 à partir de :
- 40 g de bromoxynil octanoate fondu
- 10 g de SOLVESSO 200®
- 10 g de SOPROPHOR 461 P®
- 10 g de SOPROPHOR PA 23®
- 10 g de butoxy-2 éthanol
- 20 g d'eau.

On obtient une microémulsion stable à une température de l'ordre de -5°C à +45°C et diluable sous forme d'une émulsion stable.

## Exemple 8

On répète l'opération décrite à l'exemple 1 à partir de :
- 56 g de bromoxynil octanoate fondu
- 14 g de SOLVESSO 200®
- 6,7 g de SOPROPHOR 461 P®
- 6,7 g de SOPROPHOR PA 23®
- 6,6 g de butoxy-2 éthanol
- 10 g d'eau.

On obtient une microémulsion fluide et stable à une température de l'ordre de -5°C à +45°C et diluable sous forme d'une émulsion stable.

## Exemple 9

On répète l'opération décrite à l'exemple 1 à partir de :
- 40 g de cyperméthrine
- 10 g de SOPROPHOR FL® (phosphate de tristyrylphenol éthoxylé neutralisé à la triéthanolamine de HLB = 16 commercialisé par RHONE-POULENC).
- 18,6 g de SOPROPHOR BSU® (tristyrylphenol oxyéthylé de HLB = 12,5 commercialisé par RHONE-POULENC)
- 14,4 g d'isobutanol
- 17 g d'eau.

On obtient une microémulsion stable dans une gamme de température de l'ordre de -5°C à +45°C et diluable sous forme d'une microémulsion.

## Exemple 10

On répète l'opération décrite à l'exemple 1 à partir de :
- 20 g de prochloraz fondu
- 5 g de SOLVESSO 200®
- 9 g de SOPROPHOR PA 23®
- 9 g de SOPROPHOR 461 P®
- 13 g de n-butanol
- 44 g d'eau.

La microémulsion obtenue est diluable sous forme d'une microémulsion et non d'une émulsion. En effet la quantité de prochloraz est en dehors des limites revendiquées.

## Exemple 11

On répète l'opération décrite à l'exemple 1 à partir de :
- 40 g de prochloraz fondu
- 10 g de SOLVESSO 200®
- 2 g de SOPROPHOR PA 23®
- 21 g de SOPROPHOR 461 P®
- 10 g d'isobutanol
- 17 g d'eau.

La microémulsion obtenue n'est pas stable à une température de l'ordre de -5°C à +45°C. En effet le rapport pondéral agent tensio-actif non-ionique/agent tensio-actif anionique est en dehors des limites revendiquées.

## Revendications

1.  Microémulsions concentrées de matières organiques insolubles dans l'eau, caractérisées en ce qu'elles contiennent :

– de 30 à 85% de leur poids d'au moins une matière organique à l'état liquide insoluble dans l'eau,

– de 5 à 45% de leur poids d'un système tensio-actf constitué d'un agent tensio-actif anionique, d'un agent tensio-actif non ionique et d'un cotensio-actif choisi parmi les alcools aliphatiques linéaires ou ramifiés en $C_2$-$C_{10}$ et les éthers-alcools de formule $R$-$(OR')_n$ $OH$, où $R$ représente un radical alkyle linéaire ou ramifié en $C_1$-$C_8$, $R'$ un radical alkylène en $C_2$-$C_3$ et n un nombre entier allant de 1 à 3, le rapport pondéral agent tensio-actif non-ionique/agent tensio-actif anionique pouvant aller de 10/90 à 90/10 et le rapport pondéral cotensio-actif/agents tensio-actifs non-ionique et anionique pouvant aller de 1/10 à 2,

– et le complément à 100% en poids d'eau.

2. Microémulsions concentrées selon la revendication 1, caractérisées en ce qu'elles contiennent :

– de 35 à 80% de leur poids, d'au moins une matière organique à l'état liquide insoluble dans l'eau,

– de 10 à 40% de leur poids d'un système tensio-actif constitué d'un agent tensio-actif anionique, d'un agent tensio-actif non-ionique et cotensio-actif choisi parmi les alcools aliphatiques linéaires ou ramifiés en $C_2$-$C_{10}$ et les éthers-alcools de formule $R$-$(OR')_n$ $OH$, où $R$ représente un radical alkyle linéaire ou ramifié en $C_1$-$C_8$, $R'$ un radical alkylène en $C_2$-$C_3$, et n un nombre entier allant de 1 à 3, le rapport pondéral agent tensio-actif non-ionique/agent tensio-actif anionique pouvant aller de 10/90 à 90/10 et le rapport pondéral cotensio-actif-/agents tensio-actifs non-ionique et anionique pouvant aller de 1/10 à 2,

– et le complément à 100% en poids d'eau.

3. Microémulsions concentrées selon la revendication 1 ou 2, caractérisées en ce que le cotensio-actif est choisi parmi les alcools aliphatiques linéaires ou ramifiés en $C_3$-$C_5$, et les éthers-al-cools de formule $R$-$(OR')_n$ $OH$, où $R$ représente un radical alkyle linéaire ou ramifié en $C_2$-$C_4$, $R'$ un radical alkylène en $C_2$ et n un nombre entier allant de 1 à 3, le rapport pondéral agent tensio-actif non-ionique/agent tensio-actif anionique peut aller de 25/75 à 75/25, et le rapport pondéral cotensio-actif/agents tensio-actifs non-ionique et anionique de 1/4 à 3/4.

4. Microémulsions concentrées selon l'une quel-conque des revendications précédentes, carac-térisées en ce que la matière organique insoluble dans l'eau est un solide à bas point de fusion maintenu à l'état fondu à l'aide d'un solvant et éventuellement d'un agent tensio-actif liposoluble.

5. Procédé de préparation de microémulsions concentrées de matières organiques insolubles dans l'eau par addition d'eau à un mélange comprenant :

– de 30 à 85 parties en poids d'au moins une matière organique à l'état liquide insoluble dans l'eau,

– de 5 à 45 parties en poids d'un système tensio-actif constitué d'un agent tensio-actif anionique, d'un agent tensio-actif non-ionique et d'un cotensio-actif choisi parmi les alcools aliphatiques linéaires ou ramifiés en $C_2$-$C_{10}$ et les éthers-alcools de formule $R$-$(OR')_n$ $OH$, où $R$ représente un radical alkyle linéaire ou ramifié en $C_1$-$C_8$, $R'$ un radical alkylène en $C_2$-$C_3$ et n un nombre entier allant de 1 à 3, le rapport pondéral agent tensio-actif non-ionique/agent tensio-actif anionique pouvant aller de 10/90 à 90/10, et le rapport pondéral cotensio-actif/agents tensio-actifs non-ionique et anionique pouvant aller de 1/10 à 2,

– la quantité d'eau additionnée représentant le complément à 100 parties en poids.

6. Procédé selon la revendication 5, caractérisé en ce que le mélange comprend :

– de 35 à 80 parties en poids, d'au moins une matière organique à l'état liquide insoluble dans l'eau,

– de 10 à 40 parties en poids d'un système tensio-actif constitué d'un agent tensio-actif anionique, d'un agent tensio-actif non-ionique et d'un cotensio-actif choisi parmi les alcools aliphatiques linéaires ou ramifiés en $C_2$-$C_{10}$ et les éthers-alcools de formule $R$-$(OR')_n$ $OH$, où $R$ représente un radical alkyle linéaire ou ramifié en $C_1$-$C_8$, $R'$ un radical alkylène en $C_2$-$C_3$, et n un nombre entier allant de 1 à 3, le rapport pondéral agent tensio-actif non-ionique/agent tensio-actif anionique pouvant aller de 10/90 à 90/10 et le rapport pondéral cotensio-actif/agents tensio-actifs non-ionique et anionique pouvant aller de 1/10 à 2.

7. Procédé selon l'une des revendications 5 ou 6, caractérisé en ce que le cotensio-actif est choisi parmi les alcools aliphatiques linéaires ou rami-fiés en $C_3$-$C_5$, et les éthers-alcools de formule $R$-$(OR')_n$ $OH$, où $R$ représente un radical alkyle linéaire ou ramifié en $C_2$-$C_4$, $R'$ un radical alkylène en $C_2$ et n un nombre entier allant de 1 à 3, le rapport pondéral tensio-actif non-ionique/agent tensio-actif anionique peut aller de 25/75 à 75/25, et le rapport pondéral cotensio-actif/agents tensio-actifs non-ionique et anionique de 1/4 à 3/4.

8. Procédé selon l'une quelconque des revendications 5 à 7, caractérisé en ce que la matière organique insoluble dans l'eau est un solide à bas point de fusion maintenu à l'état fondu à l'aide d'un solvant et éventuellement d'un agent tensio-actif liposoluble.

9. Utilisation des microémulsions faisant l'objet de l'une quelconque des revendications 1 à 4 pour la formulation des matières organiques phytosanitaires.

EP 0 432 062 A1

Office européen des brevets

**RAPPORT DE RECHERCHE EUROPEENNE**

Numero de la demande

EP 90 42 0519

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 088 049 (CIBA-GEIGY)<br>* Pages 3,4 *<br>--- | 1-3,5-7,9 | A 01 N 25/04<br>B 01 F 17/00 |
| X | EP-A-0 302 701 (ROHM AND HAAS)<br>* Page 3, lignes 44-64; page 4, lignes 20-23; page 5, lignes 12-20 *<br>--- | 1-3,5-7,9 | |
| X | EP-A-0 297 207 (HOECHST)<br>* Page 7, lignes 56-58; page 9, lignes 20-51; page 18, paragraphe 6 *<br>--- | 1-9 | |
| A | US-A-4 536 301 (T.P. MALLOY et al.)<br>* Colonne 12, lignes 19-39 *<br>--- | 1 | |
| A | US-A-2 719 785 (G.B. JOHNSON)<br>* Colonne 5, lignes 45-61 *<br>----- | 1 | |

DOMAINES TECHNIQUES RECHERCHES (Int. Cl.5)

A 01 N
B 01 F

Le présent rapport a été établi pour toutes les revendications

| Lieu de la recherche | Date d'achèvement de la recherche | Examinateur |
|---|---|---|
| LA HAYE | 18-01-1991 | KERRES P.M.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

7